# EUROPEAN PATENT APPLICATION

(11) **EP 3 666 485 A1**
(43) Date of publication of application: **17.06.2020**
(21) Application number: 18211409.0
(22) Date of filing: 10.12.2018
(51) Int. Cl.: B29C 33/38

(54) **MOULD FOR MOULDING AUTOMOTIVE TRIM PARTS**

(71) Applicant: Autoneum Management AG, 8406 Winterthur (CH)
(72) Inventor: SCHÜRMANN, Jeremias, Mountain View, 94043 CA (US)

(57) **Abstract**

Moulding tool for compression moulding automotive trim part comprising at least one moulding part, having a 3D shaped cavity, whereby the moulding part is comprising thermoset resin bound particles.

## Description

### Technical Field

The invention is directed to a mould for making automotive trim parts or panelling, to a method of producing such a mould, as well as to the use of such a mould.

### Background Art

Automotive trim parts are for a large part made of layered material like fibrous felt, film or foam, moulded together to form the desired 3D shape suited to fit the relevant space in the car, for instance an interior flooring part fitted on the floor panel of a vehicle and/or moulded to form around the middle tunnel of a car. Larger exterior parts such as wheel arch liners or underbody panels but also smaller cladding parts like engine covers are made using a moulding process.

The moulding process for moulding automotive trim parts may use cold moulding of heated material. The moulding process might be a 2 step process, in a first step the material is heated close to the melting or curing point of the binder used, and in a second step the material is moulded and cooled. The moulded part can be taken out of the tool if the binder is set or transferred to a cooling jig to further cool down the moulded part.

Automotive trim parts are made of one layer or a layering of various materials, like fibrous felt, including shoddy cotton or glass fiber containing felts, foams, heavy layer in the form of thermoplastic elastomeric filled material, films or combinations of these types of layers. The moulds are used for a considerable amount of parts, while they endure high temperatures and pressure as well as harsh abrading condition during the moulding process. The pressure, mostly due to the clamping force, during the moulding process is high, inside the mould due to the compressed materials, as well as on the mould itself due to the closure pressure and the clamping pressure. The pressure on a mould might go up to 250 ton depending on the size and thickness of the part produced, the material composition and final density of the material layers. Locally even higher loads on a small surface might occur.

Currently, moulds made of non-corroding metals can be used for this type of process, in particularly if the production size is going above 10.000 parts.

Solid steel or aluminium may be used in most cases; the negative surface forming the shape of the product is milled or engraved from a steel or aluminium block. This process is costly and time consuming. In case the mould needs adaptation, a block of the steel or aluminium mould must be replaced or the mould has to be produced again. Due to the material chosen such a metal mould is heavy and costly.

It is therefore the object of the current invention to provide an alternative moulding tool that can be used in the moulding process of automotive trim parts, in particularly for parts that are made of at least one or multiple layers of for instance foam, fibrous felt, scrims, heavy layer in the form of thermoplastic elastomeric filled materials or film. In particularly an alternative moulding tool that can be used in the production process of large quantities of parts.

### Summary of invention

The object of the invention is achieved by a moulding tool according to claim 1 and the process for producing the moulding tool according to claim 10 and the use of the moulding tool for producing automotive trim parts according to claim 15. In particular by a moulding tool for compression moulding automotive trim parts comprising at least one mould having a 3D shaped cavity characterised in that the mould comprises a thermoset resin binder matrix with particulates bound within the matrix.

The mould or mould halves are preferably shaped to have a cavity defining with the surface of the automotive part to be formed with the mould. Preferably the moulding tool consists of 2 mould halves, each having the shape of the first and second surface of the final automotive part, forming together the moulding cavity for the automotive trim part to be formed.

Preferably the mould is made using 3D printing technology, preferably by binder jetting technology, an additive manufacturing process whereby a binder is selectively deposited onto a powder bed, bonding the particles and binder in the area of deposit together to form a solid part, one layer at a time.

Preferably the thermoset resin is one of an acrylic based, polyester based, furan based resin, an epoxy based resin or a phenolic based resin.

Surprisingly, it is possible to produce moulds for thermal compression moulding using this process together with the preferable materials according to the invention to make durable moulds that can be used in the process of making automotive parts from single or multiple layers like for instance fibrous felt and or foam, eventually including other thermoplastic material layers like foils or scrims, or filled heavy layer materials.

Surprisingly, the material can withstand the internal pressure as well as the pressure on the mould during the moulding of the parts. In addition, the material due to its high temperature resistance is more resistant to abrasion of the surface and the moulds are therefore more durable. The automotive parts produced with the mould according to the invention remain within the tolerance range for a longer time. Hence the need for refurbishing the mould is reduced. As the material and production cost as well as the production time is less for this type of moulds, a mould change is easier achieved in the case needed.

Due to the combination of printing and the chosen materials it is possible to obtain a very precise inner surface of the mould, therefor guaranteeing better defined, higher precision, moulded end products.

Moulds produced according to the invention may be used for normal production but are also beneficial for small volume production and for testing of new materials and methods, the price of such tools and the time of production being much lower than with standard tools.

In a further preferred embodiment at least the mould surface facing the moulding cavity is penetrated with a second material, preferably a thermoset resin, preferably acrylic, epoxy, phenolic or furan based resin. Preferably at least the first 1 mm in the mould thickness direction is penetrated. Due to the penetration the voids between the binder-particulate matrix are filled with the second material, making the material non-porous and the layer impervious.

At least a layer of the printed material at the inner surface is impregnated, however the mould can also be impregnated or coated over its entire surface for at least 1 mm or at least 5% of the thickness of the mould. The impregnation can go up to 100% of the thickness of the mould. The same thickness of impregnation can also be applied in any channels if available in the tool.

Surprisingly, the moulding surface as such treated showed a better surface quality that could be polished when deemed necessary, while also the printed mould part was overall more stiff and durable.

In addition the infusion (or penetration) treatment makes the printed material air and liquid tight, hence the distribution of fluids or gasses through the channels for temperature control is possible without contact with the material moulded.

In more detail the moulds are produced using a layering process: firstly, a thin layer of particulate is spread over a platform with an area large enough to produce the mould forming a bed of particulate, than a carriage with at least one inkjet type nozzle passes over the bed of spread particles and selectively deposits droplets of binder that bind the particulate together, after the process is finished the platform is moved the distance of one layer down and the process restarts again. Multiple layers together will form the final mould. After finishing the printing process the mould is left to cure, preferably the mould encapsulated in the particulate, establishing its final strength. After curing the mould is cleaned, taking away excess and unbound particles.

Although this type of moulds might be made of thermoplastic resins, it is preferably made of thermoset material, as the melting temperature or degradation temperature of these materials as well as the thermal stability is much higher than the material to be moulded, increasing the durability of the mould.

Most automotive trim parts are made with thermoplastic binder with a melting or softening temperature between 90 and 240°C. Hence by using a thermoset resin for the mould, the mould will not be affected by the heated up material during moulding.

The resin binder used to bind the particles together according to the invention can be based either on a solution based system, whereby the binder is applied in a solvent, for instance dissolved or dispersed, and the solvent evaporates to obtain the final binding, or a polymerizing system whereby the binder forms long chains and bind or encapsulate the particles to form the mould material, might be used. After binding or curing process the material is chemically changed.

Thermoset resins are preferably used as binder as these resins have a high thermal stability. For instance, a system based on for instance acrylic based resin, polyester based resin, furan based resin, phenolic based resin or epoxy based resin as the binder might be chosen. Binder enhancing additives or additives enhancing the printer process might be added to the binder system. However also additives that enhance the final product properties in particularly those which prevent soiling of the surface are preferred.

The mould might be washed or cleaned to reduce the volatile component of the mould to prevent an increase of volatile components in the automotive parts to be produced using the mould.

During the use of the mould in a thermo compression moulding process, pre-heated material is placed in the mould and the mould closed to form the final part.

Due to the use of hot material within the mould, the mould will increase in temperature. To manage the temperature of the mould it is preferable that channels are integrated into the mould design, these channels are most effective if placed close to the inner surface of the moulding cavity. Preferably they are placed following the shape of the surface at a constant distance to the surface. Preferably the channels can be connected to an external system based on gasses, like air - cold or ambient- or fluids like for instance water or oil.

The resin binder might be cured with heat during the production of the mould and or directly after the printing.

Preferably the amount of binder in the final mould material might be between 0.9 and 2.1% of the total weight.

Preferably a particulate or granular material with an average grain size of less than 500 µm, preferably between 100 and 300 µm is used. A coarser particle size will make the mould more porous, thereby increasing the permeability of the mould, increasing the cooling process of the material as well as the mould, while a smaller average particle size will give a smoother surface but might increase the cooling time. A smoother surface might be more beneficial for anti-soiling of the surface during the automotive parts production.

For moulding certain materials, a further coating and or penetration step, might not be necessary. A lower average grain size increases the density of particles hence the mould might be heavier however the durability of the mould might be increased as well. A lower average grain size might however increase the actual printing time for the mould, hence an optimised balance between needed requirements for the mould and optimal particle grain size must be established.

For a more porous mould a coarser grain size can be chosen, a coarser mould will enhance the cooling process of the automotive trim part during moulding hence will further reduce the cooling time. It will also reduce the cooling time of the mould itself as during the process of moulding many parts, the mould will increase its own temperature over time. However, it might be preferable to use particulate with a smaller diameter as this might slow down the cooling and this might be beneficial for the cooling or curing of the material that is moulded. For instance, if a quick cooling process has a negative impact on the product moulded.

The main component of the mould is a particle or particulate material. Preferably the particulate or granular material is inert, natural, or man-made, for instance at least one chosen from the group of quartz sand or silica sand, artificial sand, ceramic particles, or metal particles like steel aluminium, copper or thermally conductive alloys, or a combination of particles. Depending on the material selected the cooling properties of the mould might be further adapted.

As sand quartz sand with a content of SiO² of at least 95% might be used. Eventually sand with Aluminium-Oxide or Silica might be used or other mineral based sands might be used to increase the density of the mould. The natural sands are preferably used if the production of automotive parts is low and a low durability is not a problem. Natural sands are low in cost hence will decrease the cost of the mould. Artificial sands might be preferably as the form of the sand is spherical and the mineral content can be adapted based on the requirements of the mould.

The grain size is adapted to obtain a balance between necessary binding strength, density of the mould as well as porosity.

A combination of different sizes or materials within the mould is possible for instance a difference between the material used at the base of the mould and another towards the surface of the mould. The base can be seen as the lower part of the mould that rests against the press platens. It is even possible to print the base on another machine with different particulates and the upper part preferably on top of the base in a second step.

In order for the mould to achieve its full strength, preferably the resin-bound particles are cured before or after the removal of unbounded materials, either through drying, setting, or heating in a furnace. However preferably a material is used that cures at room temperature as this prevents shrinking or warping of the final mould ensuring the size, fit and shape of the automotive parts produced. Alternatively the mould can be heat treated after the penetration step.

The resin and granulate is chosen such that the bending strength of the material is at least 100N/cm², preferably the bending strength is above 300N/cm². For instance, with a furan based mould a bending strength of preferably between 220 and 330N/cm² might be obtained; while with a phenolic resin a higher bending strength might be aimed at preferably a bending strength of between 350 and 450N/cm².

Depending on the part materials used, like felt with thermoplastic binder, scrims, heavy layer material or foam the material in touch with the mould inner surface might stick or leave unwanted debris on the inner surface after moulding.

To prevent soiling of the inner surface of the mould preferably a surface treatment of the inner surface of the mould is applied to close the porous surface and to smoothen the surface roughness.

As surface treatment a coating, infusion or penetration might be applied once or on a regular basis to enhance the performance and to extend the lifetime of the mould.

Preferably the surface treatment is achieved by penetrating or infusing a second material in the porous voids of the surface to a certain depth, decreasing the porosity of at least the inner surface of the mould that will form the moulding cavity.

The second material can also penetrate fully the mould, making it a nonporous mould. This is depending on the cooling requirements of the mould, the addition of any cooling channels in the design and of the material moulded as well as the moulding process. Preferably the surface treatment and the binder are based on the same resin type.

In detail the surface treatment can be done by a less preferred simple coating applied on top of the surface to be treated. However, adding a layer on top of the surface of the mould bears possible problems. A mould is normally split in two mould halves that should accurately close together to form the full mould cavity. Adding a layer on top of each mould surface that is forming the inner cavity of the mould bears the risk that the mould will no longer match perfectly or even potentially being out of tolerance. Although putting a coating on top will add a surface protection, it will not add to the overall strength of the mould. However, depending on the trim part produced or if the part produced is only a semi-finished part a coating might be cheap and durable solution

More preferable is the use of an infusion or penetration process as surface treatment. At least a certain thickness of the mould adjacent the surface in contact with the material moulded is penetrated with material closing the pores or voids of the printed material thus treated.

During the infusion step: the surface treatment material is soaked in, pressure infused or vacuum infused inside the mould material, the mould to fill the porous gaps between the binder-particle matrix. Preferably at least a certain thickness from the surface or surfaces forming the mould cavity is thus treated. Preferably at least 5 % of the mould thickness, preferably around 1 mm of the surface thickness is penetrated with the material to close the voids or pores between the printed materials.

Due to the 3D shape of the part produced the effective mould thickness can vary locally over the mould.

Alternatively, infusion or penetration may be done throughout the entire mould to provide maximum strength to the mould or may be done over at least part of the mould surface, preferably over substantially the entire surface of the mould.

In the application where infusion is required and cooling channels are present, the infusion is performed such that the cooling channels remain open.

The infusion material is either the same as the binder material used, or a thermoset or thermoplastic material compatible with the binder material used. The material might have an adapted viscosity and other properties to enabling a good filling of the pores and binding to the matrix.

Infusion or penetration of the 3D printed tool or at least a part of the surface in thickness direction, might be achieved by dipping the tool in a bath and or by impregnating or penetrating the mould with the second material under pressure perpendicular to the surface to be treated, such that the voids are filled in the thickness direction of the mould part. Locally the depth of penetration can vary over the part, but preferable is at least 10mm and/or 5% of the local thickness.

Use of the 3D printed mould according to the invention for compression moulding automotive parts made of heated single or multilayer materials with at least one layer being a foam, fibrous layer, nonwoven, scrim, filled thermoplastic layer, film or foil layer.
Figure 1 Example of compression moulding tool with mould halve according to the invention.
Figure 2 Schematic figure of the process of producing the moulds according to the invention.
Figure 3 Schematic figure of the material build-up of the mould
Figure 4 Example of a 3D printing process for producing the mould according to the invention.

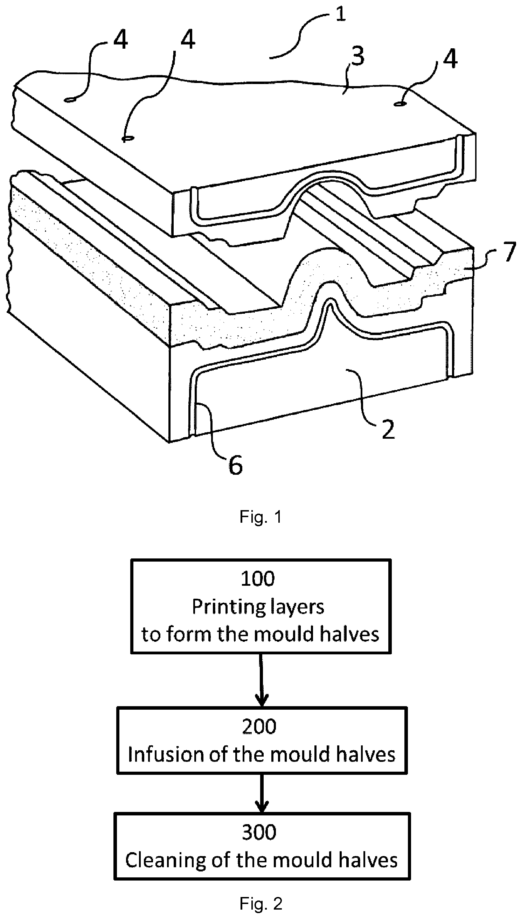

Figure 1 is showing an example of compression moulding with mould halves made according to the invention. According to the figure a press mould 1 comprises a lower mould half 2 and an upper mould half 3. These moulds can have cooling channels for instance as indicated by the openings 4 and a cross section through a channel 6 as possible examples. Preferably, the channels are placed at least partially parallel and close to the surface. The two mould halves, 2 and 3 together define a mould cavity in which the automotive product will be moulded. An example of an automotive product 7 as shown might consist of a single layer, of fibrous material or foam. However multiple layers that need compression and binding within and or between the layers might also be used in the moulds.

Preferably the design of the mould halves might have spaces for inserting cutting and or sealing elements or to enable other types of inserts. The mould will close under pressure of a mould press for the time necessary to mould and set the material in the final shape. After which the mould opens and the part can be removed.

The mould or mould halves might have dedicated areas for mounting the mould to the press as well as for other functions normally provided for by a mould.

The mould might further comprise a cooling system comprising cooling channels 4, 6 within the mould halves. The cooling channel might contain a fluid, while a passive or active replacement system (not shown) for the fluid transports the fluid through the channels. The fluid can circulate within the mould and an area with lower temperatures to cool or heat when necessary, the mould during use.

Figure 2 is showing schematically a preferred process for making the mould halves with the basic steps of printing layers to form the mould halves (100) with the desired design, Infusion of the mould halves(200) by penetrating at least the surface forming the cavity with a penetrating material that will fill the voids or pores between the printed material forming the mould and optionally cleaning (300) the mould halves to get rid of any debris or free material that might interfere with the use of the mould during the moulding process of the automotive part.

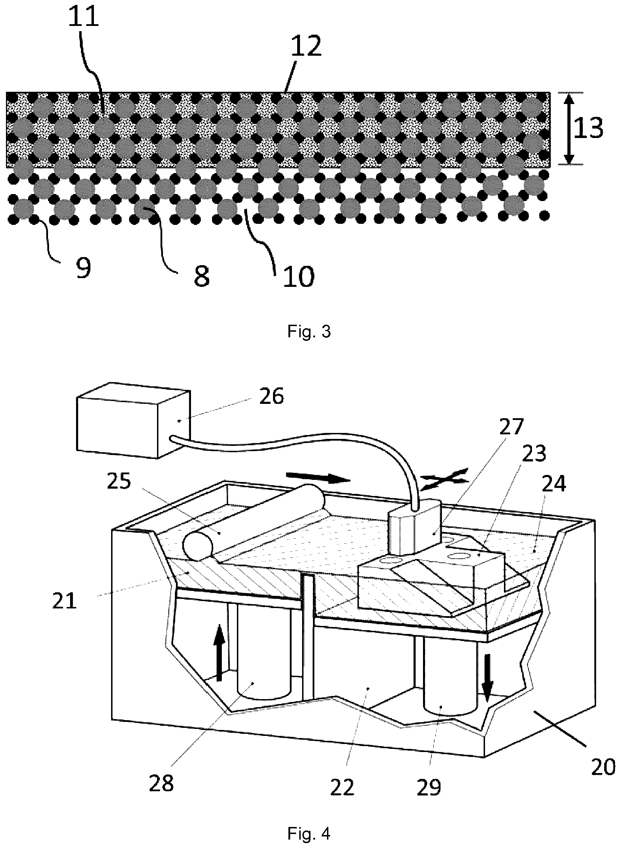

Figure 3 shows schematically a mould halve with an infused area. The mould is formed by particles (8) bound by a thermoset binder (9) forming the mould structure, between the bound particles voids are formed (10). At least by partially penetrating a resin material (11) into the voids (10) it is possible to make the mould air and/ or liquid tight for at least the surface (12) of the mould forming the moulding cavity. The thickness of the infused layer (13) is at least 5% of the overall thickness of the mould, preferably at least 10mm and can be up to 100% of the mould thickness. During the infusion process the cooling channels should stay open, for example the surface can be made airtight by penetrating the resin material just up to the thickness where the cooling channels are situated. Alternatively the cooling channels can be filled with a fluid or material to prevent full penetration of the channels during the penetration process. The material or fluid can be discarded after the penetration process.

Figure 4 shows an example for a machine and process of producing the mould according to the invention. The 3D printing tool comprises a housing 20 for feeding the particle supply 21 as well as taking up the printed part 23 embedded in particles 24. In addition a binder resin supply system, with a liquid resin feed, for instance using a pump or extruder and pump system 26 and a printing head for applying droplets of binder resin in a desired pattern.

The process of producing the printed part is a repeating process of the following steps, providing a layer of powder by the powder feed roller. As soon as a new layer of powder is placed on top of the platform or the printed part, the binder printing head will place droplets of binder resin in a desired 2D pattern on top of the particle layer. After finalising the pattern, the pistons move again as indicated with the arrows one step up or down, and a next layer of powder will be displayed on top of the thus formed part again. Layers of powder and printing the resin binder will be repeated until the full thickness of the part has been achieved. The box with the printed part with bound particles is incubated preferably in a curing oven to achieve the full binding strength of the resin. The fully bound part is cleaned, taking unbound particles away and can be used as such or in a second step at least the surface of the mould can be impregnated or penetrated with a resin material to close the voids between the bound particles.

## Claims

1. Moulding tool, for compression moulding automotive trim parts, comprising at least one mould having a 3D shaped cavity, **characterised in that** the mould part comprises a thermoset resin binder matrix with particulates bound within the matrix.

2. Moulding tool according to claim 1 whereby the thermoset resin binder is one of an acrylic based, polyester based, furan based resin, epoxy based resin or a phenolic based resin.

3. Moulding tool according to claim 1 or 2 whereby the particulates are a granular material with an average grain size of less than 500µm, preferably between 100 and 300µm.

4. Moulding tool according to one of the preceding claims whereby the particulates or granular material is one of chosen from the group of quartz sand or silica sand, artificial sand, ceramic particles or metal particles or thermally conductive alloys or a combination of the materials mentioned

5. Moulding tool according to one of the preceding claims whereby at least the surface forming the cavity of the mould further comprises a surface treatment chosen from a coating and/or infusion with a second material.

6. Moulding tool according to one claim 5, whereby the second material for the surface treatment is a thermoset material, preferably at least one of an acrylic based, polyester based, furan based, epoxy based, or phenolic based materials.

7. Moulding tool according to claim 5 or 6, whereby the surface treatment resin and the binder resin are the same.

8. Moulding tool according to claims 5, 6 or 7, whereby the surface treatment material is forming a closed layer at least on part of the moulding surface of at least 5% of the thickness of the mould, preferably up to 100% of the thickness of the mould, or at least 1 mm of the thickness of the mould.

9. Moulding tool according to one of the preceding claims further comprising channels integrated in the mould, preferably directed at least partially parallel to the inner mould cavity surface, to enable the temperature of the mould to be controlled.

10. Process for producing a moulding tool according to claim 1 to 9 comprising at least the step of printing layers (100) to form the mould by alternating steps of (1) layering a layer of particulates and (2) depositing binder droplets in a desired pattern to bind locally particulates and the binder material together, and whereby the alternating steps (1) and (2) are repeated until the mould is completely printed.

11. Process according to claim 10, further comprising an additional step of treating the surface, at least the surface forming the moulding cavity, with a second material to fill the voids between the binder and the particulates.

12. Process according to claim 10, further comprising an additional step of coating at least the surface of the printed mould forming the moulding cavity with second material to fill the voids between the binder and the particulates at least at the surface of the mould.

13. Process according to claim 10, 11 or 12, comprising the additional step of cleaning the mould produced to get rid of any debris or free material that might interfere with the use of the mould or the quality of the moulded part.

14. Process according to at least one of claim 12 to 14, further comprising at least one heat treatment step to either treat the printed mould, or treat the printed and surface treated mould.

15. Use of the moulding tool according to claim 1 to 9 or produced according to claim 10 to 14 for compression moulding automotive parts made of heated single or multilayer materials with at least one layer being a foam, fibrous layer, nonwoven, scrim, heavy layer formed by a filled thermoplastic elastomeric layer, film or foil layer.
